# EUROPEAN PATENT SPECIFICATION

(11) **EP 1 860 076 B1**
(45) Date of publication and mention of the grant of the patent: **22.07.2009**
(21) Application number: 07108298.6
(22) Date of filing: 16.05.2007
(51) Int. Cl.: C03C 17/38, C23C 18/18

(54) **Mirror**
Spiegel
Miroir

(30) Priority: 17.05.2006 EP 06114082
(43) Date of publication of application: 28.11.2007
(73) Proprietor: AGC Flat Glass Europe SA, 1170 Bruxelles (BE)
(72) Inventor: Ventelon, Lionel, B-6040, Jumet (BE); Pilloy, Georges, B-6040, Jumet (BE)
(74) Representative: Larangé, Françoise

(56) References cited:
- EP-A- 1 577 277
- US-B2- 6 565 217

## Description

This invention relates to mirrors and to a process of manufacturing mirrors.

The mirrors of this invention may have various applications, for example: domestic mirrors used for example in furniture, wardrobes or bathrooms; mirrors in make-up boxes or kits; mirrors used in the automotive industry, as rear-view mirrors for cars, for example. Such mirrors may be produced by applying a silver coating on glass sheets, particularly on soda lime glass, flat glass or float glass.

Conventionally, silver mirrors have been produced as follows: the glass was first of all polished and then sensitised, typically using an aqueous solution of SnCl₂; after rinsing, the surface of the glass was usually activated by means of an ammoniacal silver nitrate treatment, and a silvering solution was then applied in order to form an opaque coating of silver; this silver coating was then covered with a protective layer of copper and then with one or more coats of leaded paint in order to produce the finished mirror. The combination of the protective copper layer and the leaded paint was deemed necessary to provide acceptable ageing characteristics and sufficient corrosion resistance.

More recently, Glaverbel developed mirrors which dispensed with the need for the conventional copper layer, which could use substantially lead-free paints and yet which still had acceptable or even improved ageing characteristics and corrosion resistance. For example, US patent number 6,565,217 describes embodiments of a mirror with no copper layer which comprises in the order recited: a vitreous substrate; both tin and at least one material selected from the group consisting of palladium (II), bismuth (III), chromium (II), gold (III), indium (III), nickel (II), platinum (II), rhodium (III), ruthenium (III), titanium (III), vanadium (III) and zinc provided at a surface of the vitreous substrate; a silver coating layer on said surface of the substrate; at least one material selected from the group consisting of tin (II), chromium (II), vanadium (II or III), titanium (II or III), iron (II), indium (I or II), copper (I) and aluminium (III) present at the surface of the silver coating layer which is adjacent to an at least one paint layer; and at least one paint layer covering the silver coating layer. Such mirrors provided a significant advance with respect to conventional coppered mirrors.

According to one of its aspects, the present invention provides a mirror with no copper layer as defined by claim 1. Other claims define preferred and/or alternative aspects of the invention.

The invention provides an alternative mirror structure. In addition, this structure may offer at least an equal or even improved resistance to ageing and/or corrosion than conventional mirrors with a copper layer or already known mirrors without a copper layer.

Mirrors according to the invention comprise chromium (III), i.e. trivalent chromium, provided at the surface of the silver coating layer which is adjacent to the at least one paint layer overlaying the silver coating layer. Alternatively, chromium (III) may be provided together with at least one material selected from the group consisting of Sn, Pd, V, Ti, Fe, In, Cu, Al, Ni, Eu, Pt, Ru and Rh at the surface of the silver coating layer which is adjacent to the paint layer overlaying the silver coating layer.

Mirrors according to the invention preferably have good ageing and corrosion resistance, preferably at least comparable to the ageing and corrosion resistance of mirrors of the type described in US patent number 6,565,217.

Advantageously, one or more material may be deposited during an activating step on a surface of the glass substrate on which the silver layer is to be deposited; this may contribute to the corrosion resistance of the mirror. Such materials may be selected from the group consisting of bismuth, chromium, gold, indium, nickel, palladium, platinum, rhodium, ruthenium, titanium, vanadium and zinc. Palladium is preferred. Tin may be provided at or on a surface of the glass substrate on which the silver layer is to be deposited; this may sensitise the glass substrate and may facilitate adhesion of the silver layer thereto. The glass substrate may be sensitised prior to being activated, activated prior to being sensitised or sensitised and activated simultaneously.

Materials provided at the surface of the glass substrate during an activating and/or sensitising step are preferably provided as islets, that is to say that preferably they do not produce a distinct continuous layer of, for example, palladium, but that the material is in the form of islets on the surface of the glass. The same may apply to materials provided at the surface of the silver coating layer which is adjacent to the paint layer.

Preferably, the silver coating layer has a thickness of at least 40 nm, at least 50 nm, more preferably at least 60 nm, or at least 70 nm and not exceeding 110 nm, preferably 100 nm. These values offer a good compromise between a good light reflection value for the mirror and an acceptable cost of production.

In one preferred embodiment, the paint layer or at least one of the paint layers, preferably at least the exposed outermost paint layer, applied over the silver layer is lead-free or substantially lead-free. Conventionally, silver coating layers of mirrors were protected by an overcoat of copper. The copper layer was itself protected from abrasion and corrosion by a layer of paint. The paint formulations which afforded acceptable levels of protection against ageing and/or corrosion contained lead pigments. The proportion of lead in such a leaded paint layer could be around 13000 mg/m². The mirrors according to the present invention not only dispense with the need for a copper layer but they also allow the use of paints which are substantially lead-free. This is advantageous in that lead is toxic and its avoidance has environmental benefits. Substantially lead-free means herein that the proportion of lead in the paint is significantly less than the proportion of lead in leaded paints conventionally used for mirrors. The proportion of lead in a substantially lead-free paint layer as herein defined is less than 500 mg/m², preferably less than 400 mg/m², more preferably less than 300 mg/m². The proportion of lead in a lead-free paint layer as herein defined is less than 100 mg/m², preferably less than 80 mg/m², more preferably less than 60 mg/m².

Traces of silane may be present at the surface of the silver coating layer which is provided adjacent to the at least one paint layer covering the silver coating layer. The treatment of the silver coating layer with a silane before painting may enhance and/or contribute towards the resistance of the mirror to abrasion and/or corrosion.

Mirrors according to the present invention preferably also have an acceptable or even improved resistance to ageing and/or corrosion; this may be defined with reference to the CASS test.

One indication of the corrosion resistance and/or resistance to ageing of a mirror incorporating a silver film can be given by subjecting it to a copper-accelerated acetic acid salt spray test known as the CASS test in which the mirror is placed in a testing chamber at 50°C and is subjected to the action of a fog formed by spraying an aqueous solution containing 50 g/l sodium chloride, 0.26 g/l anhydrous cuprous chloride with sufficient glacial acetic acid to bring the pH of the sprayed solution to between 3.1 and 3.3. Full details of this test are set out in International Standard ISO 9227-1990. Mirrors may be subjected to the action of the saline fog for different lengths of time, whereafter the reflective properties of the artificially aged mirror may be compared with the reflective properties of the freshly formed mirror. An exposure time of 120 hours gives a useful indication of the resistance of a mirror to ageing. The CASS test is performed on 10 cm square mirror tiles having freshly cut edges, and after exposure to the copper-accelerated acetic acid salt spray for 120 and 240 hours, each tile is subjected to microscopic examination. The principal visible evidence of corrosion is a darkening of the silver layer and peeling of the paint around the margins of the mirror. The extent of corrosion is noted at five regularly spaced sites on each of two opposed edges of the tile and the mean average of these ten measurements is calculated. One can also measure the maximum corrosion present at the margin of the tile to obtain a result which is again measured in micrometers; preferably, the maximum corrosion is less than 400 µm, less than 300 µm, more preferably less than 250 µm or less than 200 µm. For a more representative evaluation, the CASS test may be performed on ten samples of a mirror and the mean average of the ten samples calculated from the mean average of each sample.

Another evidence of corrosion of mirrors is the apparition of white specks, visible with the naked eye or under an optical microscope, after the CASS test. These white specks are already defined in US 6,565,217. Preferably, mirrors according to the present invention have less than ten white specks per dm² following the CASS test, more preferably, less than five white specks per dm², or less than one white speck per dm².

In methods of manufacturing mirrors according to certain aspects of the invention, the sensitising, activating and passivating steps may contribute to the ageing and/or corrosion resistance of the mirrors and/or to their durability. Preferably the sensitising step is carried out prior to the activating step and the activating step before silvering. Preferably, the solutions brought into contact with the glass substrate during the successive manufacturing steps are sprayed onto the glass substrate with optional intervening rinsing and/or washing steps.

For example, during the industrial manufacture of flat mirrors, sheets of glass may pass through successive stations where sensitisation, activation, silvering and passivating reagents are sprayed. In practice, on a mirror production line, the sheets of glass are generally conveyed along a path by a roller conveyor. They are first of all polished and rinsed prior to being sensitised by means for example of a tin chloride solution sprayed on the glass; they are then rinsed again. An activating solution is then sprayed onto the sheets of glass, this activating solution may be for example, an acidic aqueous solution of PdCl₂. The sheets of glass then pass to a rinsing station where demineralised water is sprayed, and then to the silvering station where a traditional silvering solution is sprayed, the silvering solution being combined upon application to the glass from two separately sprayed solutions, one solution comprising a silver salt and either a reducing agent or a base and the other solution comprising whichever component (a reducing agent or a base) which is absent from the solution containing the silver salt. The flow rate and concentration of the silvering solution sprayed onto the glass are controlled so as to form a layer of silver of a desired thickness, for example containing between 700 and 900 mg/m² of silver, preferably in the range 800-850 mg/m² of silver. The glass is then rinsed and directly after the rinsing of the silver coating, an aqueous solution of for example Cr(NO₃)₃ is sprayed or poured out onto the silvered glass sheets as they move forward along the conveyor. After a further rinsing, the mirrors may then be treated by spraying with a solution containing a silane. After rinsing and drying, the mirrors are covered with one or more paint layers. The paint is then cured or dried, for example in a tunnel oven. Preferably, the paint is applied onto the silvered substrates in the form of a continuous curtain of liquid paint falling onto the glass sheets in a curtain coating process.

In one preferred embodiment, the passivating solution comprises a source of chromium (III), most preferably a Cr(III) salt in aqueous solution, in particular Cr(NO₃)₃, Cr₂(SO₄)₃, CrPO₄, CrCl₃, Cr(C₂H₃O₂)₃, or their hydrates, in acidified aqueous solution. The Cr(III) solution may have a concentration of from 0.01M to 0.5M. Bringing the silvered glass substrate into contact with a Cr(III), e.g. Cr(NO₃)₃, solution during 5 minutes may be entirely sufficient to passivate the silvered glass substrate effectively. Preferred times of contact are about 30 seconds, 1, or 2 minutes. Preferably, the pH of said passivating solution is from 1.0 to 7.0, most preferably from 1.0 to 4.0. This pH range allows solutions to be formed which are both stable and effective for passivating the glass. The passivating solution may also comprise, in addition to Cr(III), a hydrogenophosphate, for example Na₂HPO₄ or NaH₂PO₄, or H₃PO₄ in a concentration of for example between 0.01 and 0.2 M, preferably around 0.015 M; the pH of this solution may be between 1.5 and 2.5.

The thickness of the glass substrate may be greater than 1 mm, 2 mm or 2.5 mm; it may be less than 10 mm, 8 mm or 6 mm. The thickness of the glass substrate may be within the range of 1.8 mm to 8.2 mm.

The finished mirror may have a luminous reflectance of greater than 85%, preferably greater than 90% measured through the glass substrate. The luminous reflection may be less than 98%, less than 96% or less than 95%.

Embodiments of the invention will now be further described, by way of examples only, along with a comparative example.

### Example 1 & Comparative example

A mirror according to the invention is manufactured on a conventional mirror production line in which a flat sheet of soda lime float glass is conveyed along the line by a roller conveyor.

The sheet of glass is first of all polished, rinsed and then sensitised by means of a tin chloride solution, in the usual manner; it is then rinsed again. An acidic aqueous solution of PdCl₂ is then sprayed onto the sheet of glass following the teaching of US patent number 6,565,217. The sheet of glass then passes to a rinsing station where demineralised water is sprayed, and then to the silvering station where a traditional silvering solution is sprayed to form a layer containing approximately 800-850 mg/m² of silver. The glass is then rinsed by spraying with water. Away from the production line, the glass is dipped in a solution of Cr(NO₃)₃ 0.1M pH=3 during 5 minutes. After rinsing and drying, the mirror is coated under a bar coater with a two-layers paint coating comprising two coats of approximately 25 µm each, the first layer being of an acrylic based paint, the second layer, i.e. the topcoat, being of an alkyd based paint.

A comparative example not in accordance with the invention is manufactured as described above, except that after the silvering step and rinsing, instead of the Cr (III) treatment, a freshly formed acidified solution of SnCl₂ is sprayed onto the silvered glass sheet. The comparative example corresponds to a copperless mirror as previously known.

### Example 2

A mirror is manufactured as described above in example 1, except that after the silvering step and rinsing, the glass is dipped, away from the production line, in a solution of Cr(NO₃)₃ 0.1M comprising Na₂HPO₄ in a quantity of 5 g/l at pH=1 during 5 minutes.

### Example 3

A mirror is manufactured as described above in example 1, except that after the silvering step and rinsing, the glass is dipped, away from the production line, in a solution of Cr(NO₃)₃ 0.1M comprising Na₂HPO₄ in a quantity of 5 g/l at the natural pH of this solution during 5 minutes.

Mirrors manufactured in this manner are subjected to CASS tests. The results of the tests on the mirrors of example 1, 2 and 3 and the comparative example are as set out in table I. These show comparable values after the CASS test.

| **TABLE I** CASS test average in µm | Example 1 | Example 2 | Example 3 | comparative example |
|---|---|---|---|---|
| After 120 h | 120 | 130 | 130 | 120 |
| After 240 h | 230 | 260 | 240 | 380 |

## Claims

1. A mirror with no copper layer which comprises:
a glass substrate;
a silver coating layer provided at a surface of the glass substrate;
chromium (III) provided at a surface of the silver coating layer which is adjacent to a paint layer; and
at least one paint layer covering the silver coating layer.

2. The mirror according to claim 1, wherein at least one material selected from the group consisting of Bi, Cr, Au, In, Ni, Pd, Pt, Rh, Ru, Sn, Ti, V and Zn is provided at the surface of the glass substrate adjacent to the silver layer.

3. The mirror according to claim 2, wherein both Sn and at least one material selected from the group consisting of Bi, Cr, Au, In, Ni, Pd, Pt, Rh, Ru, Ti, V and Zn is provided at the surface of the glass substrate adjacent to the silver layer.

4. The mirror according to claim 3, wherein both Sn and Pd are provided at the surface of the glass substrate adjacent to the silver layer.

5. The mirror according to claim 2, wherein Pd is provided at the surface of the glass substrate adjacent to the silver layer.

6. The mirror according to any preceding claim, wherein the at least one material selected from the group consisting of Bi, Cr, Au, In, Ni, Pd, Pt, Rh, Ru, Sn, Ti, V and Zn is provided as islets at the surface of the glass substrate adjacent to the silver layer.

7. The mirror according to any preceding claim, wherein Cr (III) is provided together with at least one material selected from the group consisting of Sn, Pd, V, Ti, Fe, In, Cu, Al, Ni, Eu, Pt, Ru and Rh at the surface of the silver coating layer which is adjacent to the paint layer overlaying the silver coating layer.

8. A mirror with no copper layer, which consists essentially of, in the order recited:
a substrate in the form of a soda lime glass sheet, having a surface;
palladium and tin provided at said surface of the glass sheet;
a silver coating layer on said surface of the glass sheet, the silver layer having a surface adjacent to the glass sheet and a surface spaced from the glass sheet;
chromium (III) present at the surface of the silver coating layer spaced from the glass sheet; and
at least one paint layer covering the silver coating layer.

9. The mirror according to any preceding claim, wherein traces of silane are present at the surface of the silver coating layer which is adjacent to the paint layer overlaying the silver coating layer.

10. The mirror according to any preceding claim, wherein the at least one paint layer is substantially lead-free.

11. The mirror according to any preceding claim, wherein Cr (III) is provided as islets at the surface of the silver coating layer which is adjacent to the paint layer.

12. The mirror according to any preceding claim, wherein the silver coating layer has a thickness of 60 to 110 nm.

13. The mirror according to any preceding claim, wherein the mirror has an average edge corrosion of less that 250 µm when subjected to a 120 hour CASS test.

14. A process for manufacturing a mirror with no copper layer which comprises at least the following steps:
providing a glass substrate;
contacting the glass substrate with a silvering solution so as to form a silver coating;
contacting the silver coating formed on the glass substrate with a solution comprising ions of Cr (III); and
applying at least one paint layer over the silvered substrate.

15. The process according to claim 14 which comprises at least the following steps:
providing a glass substrate;
contacting the glass substrate with a solution comprising ions of Sn;
contacting the glass substrate with a solution comprising ions of at least one material selected from the group consisting of Bi, Cr, Au, In, Ni, Pd, Pt, Rh, Ru, Ti, V and Zn;
contacting the glass substrate with a silvering solution so as to form a silver
coating;
contacting the silver coating formed on the glass substrate with a solution
comprising ions of Cr (III); and
applying at least one paint layer over the silvered substrate.

16. The process according to any of claims 14 or 15 which consists essentially of the following steps, with optional intervening rinsing or washing steps:
providing a substrate in the form of a glass sheet, having a surface;
contacting the surface of the glass sheet with a solution comprising ions of tin;
contacting said surface of the glass sheet with a solution comprising ions of
palladium;
contacting said surface of the glass sheet with a silvering solution so as to form a silver coating;
contacting the silver coating formed on the glass sheet with a solution
comprising ions of chromium (III); and
applying at least one paint layer over the silvered glass sheet.

17. The process according to any of claims 14 to 16, wherein the step of contacting the silver coating with Cr (III) consists essentially of contacting the silver coating with a liquid comprising Cr (III) in solution.

18. The process according to claim 17, wherein said solution used to contact the silver coating formed on the glass sheet is an aqueous solution of Cr(NO₃)₃.

19. The process according to claim 18, wherein said solution used to contact the silver coating additionally comprises a hydrogenophosphate

20. The process according to any of claims 18 to 19, wherein the pH of said solution used to contact the silver coating formed on the glass sheet is from 1 to 5.

## Patentansprüche

1. Spiegel ohne Kupferschicht, der umfasst:
ein Glassubstrat;
eine Silberbeschichtungsschicht, die an einer Fläche bzw. Oberfläche des Glassubstrats vorgesehen ist;
Chrom(III), das an einer Fläche bzw. Oberfläche der Silberbeschichtungsschicht vorgesehen ist, die angrenzend an bzw. benachbart zu einer Farbschicht ist; und
zumindest eine Farbschicht, welche die Silberbeschichtungsschicht bedeckt.

2. Spiegel nach Anspruch 1, wobei zumindest ein Material, das aus der Gruppe bestehend aus Bi, Cr, Au, In, Ni, Pd, Pt, Rh, Ru, Sn, Ti, V und Zn ausgewählt ist, an der Fläche bzw. Oberfläche des Glassubstrats angrenzend an bzw. benachbart zu der Silberschicht vorgesehen ist.

3. Spiegel nach Anspruch 2, wobei sowohl Sn als auch zumindest ein Material, das aus der Gruppe bestehend aus Bi, Cr, Au, In, Ni, Pd, Pt, Rh, Ru, Ti, V und Zn ausgewählt ist, an der Fläche bzw. Oberfläche des Glassubstrats angrenzend an bzw. benachbart zu der Silberschicht vorgesehen sind.

4. Spiegel nach Anspruch 3, wobei sowohl Sn als auch Pd an der Fläche bzw. Oberfläche des Glassubstrats angrenzend an bzw. benachbart zu der Silberschicht vorgesehen sind.

5. Spiegel nach Anspruch 2, wobei Pd an der Fläche bzw. Oberfläche des Glassubstrats angrenzend an bzw. benachbart zu der Silberschicht vorgesehen ist.

6. Spiegel nach einem der vorhergehenden Ansprüche, wobei das zumindest eine Material, das aus der Gruppe bestehend aus Bi, Cr, Au, In, Ni, Pd, Pt, Rh, Ru, Sn, Ti, V und Zn ausgewählt ist, als Inseln an der Fläche bzw. Oberfläche des Glassubstrats angrenzend an bzw. benachbart zu der Silberschicht vorgesehen ist.

7. Spiegel nach einem der vorhergehenden Ansprüche, wobei Cr(III) zusammen mit zumindest einem Material, das aus der Gruppe bestehend aus Sn, Pd, V, Ti, Fe, In, Cu, Al, Ni, Eu, Pt, Ru und Rh ausgewählt ist, an der Fläche bzw. Oberfläche der Silberbeschichtungsschicht vorgesehen ist, die angrenzend an bzw. benachbart zu der Farbschicht ist, welche die Silberbeschichtungsschicht überlagert.

8. Spiegel ohne Kupferschicht, der im Wesentlichen in der folgenden Reihenfolge besteht aus:
einem Substrat in der Form einer Natronkalkglasscheibe, das bzw. die eine Fläche bzw. Oberfläche aufweist;
Palladium und Zinn, die an der Fläche bzw. Oberfläche der Glasplatte vorgesehen sind;
einer Silberbeschichtungsschicht auf der Fläche bzw. Oberfläche der Glasplatte, wobei die Silberbeschichtungsschicht eine Fläche bzw. Oberfläche, die angrenzend an bzw. benachbart zu der Glasplatte ist, und eine Fläche bzw. Oberfläche aufweist, die von der Glasplatte beabstandet ist;
Chrom(III), das an der Fläche bzw. Oberfläche der Silberbeschichtungsschicht vorhanden ist, die von der Glasplatte beabstandet ist; und
zumindest eine Farbschicht, welche die Silberbeschichtungsschicht bedeckt.

9. Spiegel nach einem der vorhergehenden Ansprüche, wobei Spuren von Silan an der Fläche bzw. Oberfläche der Silberbeschichtungsschicht vorhanden sind, die angrenzend an bzw. benachbart zu der Farbschicht ist, welche die Silberbeschichtungsschicht überlagert.

10. Spiegel nach einem der vorhergehenden Ansprüche, wobei die zumindest eine Farbschicht im Wesentlichen bleifrei ist.

11. Spiegel nach einem der vorhergehenden Ansprüche, wobei Cr(III) als Inseln an der Fläche bzw. Oberfläche der Silberbeschichtungsschicht vorgesehen ist, die angrenzend an bzw. benachbart zu der Farbschicht ist.

12. Spiegel nach einem der vorhergehenden Ansprüche, wobei die Silberbeschichtungsschicht eine Dicke von 60 bis 110 nm aufweist.

13. Spiegel nach einem der vorhergehenden Ansprüche, wobei der Spiegel eine durchschnittliche Kanten- bzw. Randkorrosion von weniger als 250 µm aufweist, wenn er einem 120stündigen CASS-Test unterzogen wird.

14. Verfahren zum Herstellen eines Spiegels ohne Kupferschicht, das zumindest die folgenden Schritte umfasst:
Bereitstellen eines Glassubstrats;
Inkontaktbringen des Glassubstrats mit einer Versilberungs- bzw. Verspiegelungslösung, um eine Silberbeschichtung zu bilden;
Inkontaktbringen der Silberbeschichtung, die auf dem Glassubstrat gebildet ist, mit einer Lösung, die Cr(III)-lonen umfasst; und
Aufbringen von zumindest einer Farbschicht über dem versilberten bzw. verspiegelten Substrat.

15. Verfahren nach Anspruch 14, das zumindest die folgenden Schritte umfasst:
Bereitstellen eines Glassubstrats;
Inkontaktbringen des Glassubstrats mit einer Lösung, die Sn-Ionen umfasst;
Inkontaktbringen des Glassubstrats mit einer Lösung, die Ionen von zumindest einem Material umfasst, das aus der Gruppe bestehend aus Bi, Cr, Au, In, Ni, Pd, Pt, Rh, Ru, Ti, V und Zn ausgewählt ist;
Inkontaktbringen des Glassubstrats mit einer Versilberungs- bzw. Verspiegelungslösung, um eine Silberbeschichtung zu bilden;
Inkontaktbringen der Silberbeschichtung, die auf dem Glassubstrat gebildet ist, mit einer Lösung, die Cr(III)-Ionen umfasst; und
Aufbringen von zumindest einer Farbschicht über dem versilberten bzw. verspiegelten Substrat.

16. Verfahren nach Anspruch 14 oder 15, das im Wesentlichen aus den folgenden Schritten und optionalen Spül- oder Waschzwischenschritten besteht:
Bereitstellen eines Substrats in der Form einer Glasplatte, das bzw. die eine Fläche bzw. Oberfläche aufweist;
Inkontaktbringen der Fläche bzw. Oberfläche der Glasplatte mit einer Lösung, die Zinn-Ionen umfasst;
Inkontaktbringen der Fläche bzw. Oberfläche der Glasplatte mit einer Lösung, die Palladium-Ionen umfasst;
Inkontaktbringen der Fläche bzw. Oberfläche der Glasplatte mit einer Versilberungs- bzw. Verspiegelungslösung, um eine Silberbeschichtung zu bilden;
Inkontaktbringen der Silberbeschichtung, die auf dem Glassubstrat gebildet ist, mit einer Lösung, die Cr(III)-Ionen umfasst; und
Aufbringen von zumindest einer Farbschicht über dem versilberten bzw. verspiegelten Substrat.

17. Verfahren nach einem der Ansprüche 14 bis 16, wobei der Schritt des Inkontaktbringens der Silberbeschichtung mit Cr(III) im Wesentlichen aus dem Inkontaktbringen der Silberbeschichtung mit einer Flüssigkeit besteht, die Cr(III) in Lösung umfasst.

18. Verfahren nach Anspruch 17, wobei die Lösung, die zum Kontaktieren der auf der Glasplatte gebildeten Silberbeschichtung verwendet wird, eine wässrige Lösung aus Cr(NO₃)₃ ist.

19. Verfahren nach Anspruch 18, wobei die Lösung, die zum Kontaktieren der Silberbeschichtung verwendet wird, zusätzlich ein Hydrogenphosphat umfasst.

20. Verfahren nach einem der Ansprüche 18 bis 19, wobei der pH-Wert der Lösung, die zum Kontaktieren der auf der Glasplatte gebildeten Silberbeschichtung verwendet wird, zwischen 1 und 5 liegt.

## Revendications

1. Un miroir sans couche de cuivre qui comprend :
un substrat en verre ;
un revêtement en argent appliqué sur une surface du substrat en verre ; du chrome (III) appliqué sur une surface de la couche de revêtement en argent qui est adjacente à une couche de peinture ; et
au moins une couche de peinture couvrant la couche de revêtement en argent.

2. Le miroir selon la revendication 1, dans lequel au moins un matériau sélectionné dans le groupe consistant en Bi, Cr, Au, In, Ni, Pd, Pt, Rh, Ru, Sn, Ti, V et Zn est appliqué sur la surface du substrat en verre adjacente à la couche d'argent.

3. Le miroir selon la revendication 2, dans lequel à la fois du Sn et au moins un matériau sélectionné dans le groupe consistant en Bi, Cr, Au, In, Ni, Pd, Pt, Rh, Ru, Ti, V et Zn sont appliqués à la surface du substrat en verre adjacente à la couche d'argent.

4. Le miroir selon la revendication 3, dans lequel à la fois du Sn et du Pd sont appliqués sur la surface du substrat en verre adjacente à la couche d'argent.

5. Le miroir selon la revendication 3, dans lequel du Pd est appliqué sur la surface du substrat en verre adjacente à la couche d'argent.

6. Le miroir selon l'une quelconque des revendications précédentes, dans lequel au moins un matériau sélectionné dans le groupe consistant en Bi, Cr, Au, In, Ni, Pd, Pt, Rh, Ru, Sn, Ti, V et Zn est appliqué sous forme d'îlots sur la surface du substrat en verre adjacente à la couche d'argent.

7. Le miroir selon l'une quelconque des revendications précédentes, dans lequel du Cr (III) est appliqué en même temps qu'au moins un matériau sélectionné dans le groupe consistant en Sn, Pd, V, Ti, Fe, Cu, Al, Ni, Eu, Pt, Ru et Rh sur la surface de la couche de revêtement en argent qui est adjacente à la couche de peinture sus-jacente à la couche de revêtement en argent.

8. Un miroir sans couche de cuivre, qui consiste essentiellement en, dans l'ordre énuméré :
un substrat sous la forme d'une feuille de verre sodocalcique, ayant une surface ;
du palladium et de l'étain appliqués sur ladite surface de la feuille de verre ;
une couche de revêtement en argent sur ladite surface de la feuille de verre, la couche de revêtement en argent ayant une surface adjacente à la feuille de verre et une surface éloignée de la feuille de verre ;
du chrome (III) présent à la surface de la couche de revêtement en argent éloignée de la feuille de verre ; et
au moins une couche de peinture couvrant la couche de revêtement en argent.

9. Le miroir selon l'une quelconque des revendications précédentes, dans lequel des traces de silane sont présentes à la surface de la couche de revêtement en argent qui est adjacente à la couche de peinture sus-jacente à la couche de revêtement en argent.

10. Le miroir selon l'une quelconque des revendications précédentes, dans lequel l'au moins une couche de peinture est substantiellement sans plomb.

11. Le miroir selon l'une quelconque des revendications précédentes, dans lequel du Cr (III) est appliqué sous forme d'îlots à la surface de la couche de revêtement en argent qui est adjacente à la couche de peinture.

12. Le miroir selon l'une quelconque des revendications précédentes, dans lequel la couche de revêtement en argent a une épaisseur de 60 à 110 nm.

13. Le miroir selon l'une quelconque des revendications précédentes, dans lequel le miroir a une corrosion de bord moyenne de moins de 250 µm lorsqu'il est soumis à un test CASS de 120 heures.

14. Un procédé de fabrication d'un miroir sans couche de cuivre qui comprend au moins les étapes suivantes :
utilisation d'un substrat en verre ;
mise en contact du substrat en verre avec une solution d'argenture de manière à former un revêtement en argent ;
mise en contact du revêtement en argent formé sur le substrat en verre avec une solution comprenant des ions de Cr (III) ; et
application d'au moins une couche de peinture par-dessus le substrat argenté.

15. Le procédé selon la revendication 14 qui comprend au moins les étapes suivantes :
utilisation d'un substrat en verre ;
mise en contact du substrat en verre avec une solution comprenant des ions de Sn ;
mise en contact du substrat en verre avec une solution comprenant des ions d'au moins un matériau sélectionné parmi le groupe consistant en Bi, Cr, Au, In, Ni, Pd, Pt, Rh, Ru, Sn, Ti, V et Zn ;
mise en contact du substrat en verre avec une solution d'argenture de manière à former un revêtement en argent ;
mise en contact du revêtement en argent formé sur le substrat en verre avec une solution comprenant des ions de Cr (III) ; et
application d'au moins une couche de peinture par-dessus le substrat argenté.

16. Le procédé selon les revendications 14 et 15 qui consiste essentiellement en les étapes suivantes, avec des étapes intermédiaires de rinçage et de lavage optionnelles :
utilisation d'un substrat sous la forme d'une feuille de verre, ayant une surface ;
mise en contact de la surface de la feuille de verre avec une solution comprenant des ions d'étain ;
mise en contact de ladite surface de la feuille de verre avec une solution comprenant des ions de palladium ;
mise en contact du substrat en verre avec une solution d'argenture de manière à former un revêtement en argent ;
mise en contact du revêtement en argent formé sur le substrat en verre avec une solution comprenant des ions de Cr (III) ; et
application d'au moins une couche de peinture sur la feuille de verre argentée.

17. Le procédé selon les revendications 14 à 16, dans lequel les étapes de mise en contact du revêtement d'argent avec du Cr (III) consiste essentiellement en une mise en contact du revêtement en argent avec un liquide comprenant du Cr (III) en solution.

18. Le procédé selon la revendication 17, dans lequel la solution utilisée pour la mise en contact avec le revêtement en argent formé sur la feuille de verre est une solution aqueuse de Cr(NO₃)₃.

19. Le procédé selon la revendication 18, dans lequel ladite solution utilisée pour la mise en contact avec le revêtement en argent comprend en outre un hydrogénophosphate.

20. Le procédé selon l'une quelconque des revendications 18 à 19, dans lequel le pH de ladite solution utilisée pour la mise en contact avec le revêtement en argent formé sur la feuille de verre est de 1 à 5.
